(19) Europäisches Patentamt
European Patent Office
Office européen des brevets

(11) Veröffentlichungsnummer: 0 326 889 A2

(12) EUROPÄISCHE PATENTANMELDUNG

(21) Anmeldenummer: 89101081.1

(22) Anmeldetag: 23.01.89

(51) Int. Cl.4: C07F 9/09 , C08G 65/32 , C11D 1/34

(30) Priorität: 30.01.88 DE 3802815

(43) Veröffentlichungstag der Anmeldung: 09.08.89 Patentblatt 89/32

(84) Benannte Vertragsstaaten: AT BE CH DE ES FR GB GR IT LI LU NL SE

(71) Anmelder: Henkel Kommanditgesellschaft auf Aktien
Postfach 1100 Henkelstrasse 67
D-4000 Düsseldorf 1(DE)

(72) Erfinder: Fabry, Bernd, Dr.
Danziger Strasse 31
D-4052 Korschenbroich(DE)
Erfinder: Friese, Hans-Herbert, Dr.
Schiesshecke 53
D-4019 Monheim(DE)
Erfinder: Pieper, Friedrich
Zehntenweg 10
D-4018 Langenfeld(DE)
Erfinder: Uphues, Günter
Robert-Koch-Strasse 45
D-4019 Monheim(DE)

# (54) Oberflächenaktive Sulfophosphorsäure(partial)alkylester.

(57) Die Erfindung betrifft ein Verfahren zur Herstellung oberflächenaktiver Sulfophosphorsäure(partial)alkylester und deren Alkali-, Erdalkali-, Ammonium- und/oder Aminsalze durch Sulfonierung von Phosphorsäureestern und anschließende Hydrolyse der gebildeten Sultonzwischenstufen.

EP 0 326 889 A2

# Oberflächenaktive Sulfophosphorsäure(partial)alkylester

Die Erfindung betrifft ein Verfahren zur Herstellung oberflächenaktiver Sulfophosphorsäure(partiel)-alkylester und deren AlkaliErdalkali-, Ammonium- und/oder Aminsalze durch Sulfonierung von Phosphorsäureestern und anschließende Hydrolyse der gebildeten Sultonzwischenstufen.

Während die Verwendung von Phosphaten und Phosphonaten als Builder in Waschmittelrezepturen weit verbreitet ist, werden Phosphorverbindungen als Tenside bislang nur in untergeordnetem Maße eingesetzt.

Die Synthese phosphorhaltiger Tenside durch Umsetzung von gesättigten α-Brom-Fettsäureestern mit Triethylphosphit wurde bereits vor mehr als 20 Jahren von Maurer et.al. in J. Am. Oil Chem. Soc. 41, 205 (1964) beschrieben. Die gebildeten α-Phosphono-Fettsäureester weisen jedoch nur durchschnittliche oberflächenaktive Eigenschaften auf. In jüngster Zeit wurde die Herstellung von Alkylphosphinaten durch Umsetzung von α-Olefinen mit phosphoriger oder hypophosphoriger Säure bekannt (C. Herranz in J. Am. Oil Chem. Soc. 64, 1038 (1987). Auch diese Substanzen besitzen nur ein mäßiges Wasch- und Schaumvermögen.

Im Gegensatz zu diesen von Maurer und Herranz beschriebenen Tensiden, bei denen Phosphor direkt mit einer Kohlenstoffkette verknüpft ist, weisen Phosphorsäureester mit P-O-C-Bindungen deutlich verbesserte Tensideigenschaften auf. So ist beispielsweise bekannt, daß Alkylphosphate als Netzmittel, Antistatika, Emulgatoren sowie in Wasch- und Reinigungsmitteln Verwendung finden (A. J. OLenick, W. C. Smith in Soap, Cosm. Chem. Spec. 7, 26 (1986)). Diese Substanzen besitzen jedoch nur ein geringes Schaumvermögen, sind wenig härtebeständig und zum Teil schlecht wasserlöslich.

Aus Acta Polym. 38, 5 (1987) ist ferner die Verwendung von Alkylphosphaten, hergestellt durch Umsetzung von Alkoholen bzw. Alkoholpolyoxialkylethern mit $POCl_3$ als Antistatika für Synthesefasern bekannt.

Die Aufgabe der Erfindung bestand darin, die oberflächenaktiven Eigenschaften, die Wasserlöslichkeit sowie die Härtebeständigkeit, insbesondere langkettiger Alkylphosphate, zu verbessern.

Die Erfindung geht von der überraschenden Feststellung aus, daß sich sulfonatgruppenhaltige Phosphorsäure(partial)alkylester durch deutlich verbesserte Tensideigenschaften, eine bessere Wasserlöslichkeit sowie eine verbesserte Härtebeständigkeit auszeichnen.

Gegenstand der Erfindung ist dementsprechend ein Verfahren zur Herstellung oberflächenaktiver Sulfophosphorsäure(partial)alkylester sowie deren Alkali-, Erdalkali-, Ammonium- und/oder Aminsalzen, das dadurch gekennzeichnet ist, daß ungesättigte Alkyl-, ungesättigte Alkyl/ungesättigte Alkylpolyoxyalkyl- und/oder ungesättigte Alkylpolyoxyalkylphosphorsäureester der allgemeinen Formel I

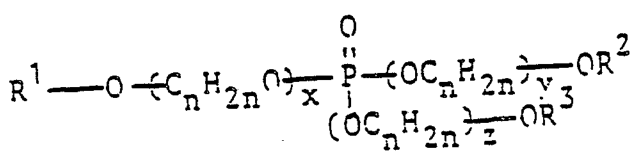

in welcher der Rest $R^1$ eine Alkenylgruppe mit 8 bis 24 Kohlenstoffatomen bedeutet, die Reste $R^2$ und $R^3$ gleich oder ungleich sind und Wasserstoff oder eine Alkenylgruppe mit 8 bis 24 Kohlenstoffatomen bedeutet, n eine Zahl von 2 bis 4 ist, die Indices x, y und z gleich oder ungleich sind und eine Zahl von 0 bis 30 bedeuten, mit $SO_3$ umgesetzt werden und die Umsetzungsprodukte mit wäßrigen Lösungen von 1 bis 1,5 Mol Alkalihydroxiden, Erdalkalihydroxiden, Ammoniumhydroxiden und/oder Aminen oder mit 1 bis 1,5 Mol wasserfreien Aminen pro Mol angelagertem $SO_3$ hydrolysiert.

Sulfophosphorsäure(partial)alkylester mit besonders günstigen oberflächenaktiven Eigenschaften werden erhalten, wenn zur Sulfonierung ungesättigte Alkyl-, ungesättigte Alkyl/ungesättigte Alkylpolyoxyalkyl- und/oder ungesättigte Alkylpolyoxyalkylphosphorsäureester der allgemeinen Formel I, in welcher der Rest $R^1$ eine Alkenylgruppe mit 12 bis 24 Kohlenstoffatomen bedeutet, die Reste $R^2$ und $R^3$ gleich oder ungleich sind und Wasserstoff oder eine Alkenylgruppe mit 12 bis 24 Kohlenstoffatomen bedeuten, n gleich 2 ist, die Indices x, y und z gleich oder ungleich sind und eine Zahl von 0 bis 10 bedeuten, eingesetzt werden. Als Edukte besonders bevorzugt eingesetzt werden solche Phosphorsäureester von ungesättigten Alkoholen und/oder ungesättigten alkoxylierten Alkoholen der allgemeinen Formel I, in welcher der Rest $R^1$ eine Alkenylgruppe mit 16 bis 22 Kohlenstoffatomen oder eine überwiegend aus Oleyl-, Palmitoleyl-, Linoleyl-, Gadoleyl- und/oder Erucylgruppen bestehende Fettalkylgruppe bedeutet, die Reste $R^2$ und $R^3$ gleich oder

ungleich sind und Wasserstoff oder eine Alkenylgruppe mit 16 bis 22 Kohlenstoffatomen oder eine überwiegend aus Oleyl-, Palmitoleyl-, Linoleyl-, Gadoleyl- und/oder Erucylgruppen bestehende Fettalkylgruppe bedeuten.

Die Sulfonierung der ungesättigten Alkyl-, ungesättigten Alkyl/ungesättigten Alkylpolyoxyalkyl- und/oder ungesättigten Al kylpolyoxyalkylphosphorsäureester der allgemeinen Formel I wird vorzugsweise bei Temperaturen zwischen 20 und 80 °C, besonders bevorzugt bei Temperaturen zwischen 30 und 50 °C, mit Schwefelsäure, Oleum oder $SO_3$-haltigen Gasgemischen, vorzugsweise mit $SO_3$-haltigen Gasgemischen durchgeführt. Der $SO_3$-Gehalt dieser Gasgemische aus $SO_3$ und Luft oder Inertgasen, beispielsweise Stickstoff, liegt vorzugsweise zwischen 1 und 10 Vol.-%. Das molare Verhältnis der Doppelbindungsäquivalente im Edukt (Phosphorsäureester) : $SO_3$ liegt bevorzugt zwischen 100 : 5 und 100: 180, besonders bevorzugt zwischen 100 : 5 und 100 : 130.

Die Umsetzungen mit Schwefeltrioxid (Sulfonierungen) werden in üblichen für die Sulfatierung von Fettalkoholen oder die Sulfonierung von Fettsäureestern, Alkylbenzolen oder Olefinen geeigneten und gebräuchlichen Reaktoren, bevorzugt vom Typ des Fallfilmreaktors, kontinuierlich oder diskontinuierlich durchgeführt (siehe beispeilsweise in Kirk-Othmer: Encyclopedia of Chemical Technology 22, 28 ff (1983)).

Nach der Sulfonierung wird das Reaktionsgemisch mit einer wäßrigen Lösung aus Alkalihydroxiden, Erdalkalihydroxiden, Ammoniumhydroxid und/oder Aminen oder mit wasserfreien Aminen hydrolysiert, indem entweder das Reaktionsgemisch zu der wäßrigen Lösung oder den wasserfreien Aminen gegeben wird oder die wäßrige Lösung oder die wasserfreien Amine zu dem Reaktionsgemisch. Vorzugsweise wird das rohe Sulfonierungsprodukt in eine wäßrige Lösung aus Alkalihydroxiden, Erdalkalihydroxiden, Ammoniumhydroxid und/oder Aminen eingetragen, wobei pro Mol angelagertem Schwefeltrioxid vorzugsweise 1 bis 1,5 Mol Hydroxide und/oder Amine eingesetzt werden. Die Hydroxide und/oder Amine dienen der Hydrolyse und Neutralisation des Sulfonierungsproduktes; überschüssiges Hydroxid und/oder Amin ist erforderlich, um das im Sulfonierungsprodukt gelöste gasförmige $SO_3$ zu neutralisieren und die sich anschließende Hydrolyse zu katalysieren. Als Neutralisationsbasen werden vorzugsweise Natriumhydroxid, Ammoniumhydroxid, Diethanolamin und/oder Triethanolamin eingesetzt. Die Konzentration der Hydroxide und/oder Amine in Wasser wird vorzugsweise so gewählt, daß das Endprodukt eine noch fließfähige oder pumpbare wäßrige Lösung bildet.

Unter den Bedingungen der Sulfonierung kommt es zu Isomerisierungen der ungesättigten Alkyl-, ungesättigten Alkyl/ungesättigten Alkylpolyoxyalkyl- und/oder ungesättigten Alkylpolyoxyalkylphosphorsäureester der allgemeinen Formel I, wobei eine statistische Verteilung der Position der olefinischen Doppelbindungen über die Alkenylgruppe erfolgt. Bei der Reaktion von $SO_3$ mit den olefinischen Doppelbindungen entstehen wahrscheinlich zunächst 1,2-Sultone, die sehr schnell zu 1,3-Sultonen und langsamer zu 1,4-Sultonen, bei höheren Temperaturen auch zu ungesättigten Sulfonsäuren, isomerisieren. Zur Überführung der bei den Sulfonierungen primär gebildeten Sultone in Hydroxysulfonate ist es erforderlich, die Sulfonierungsprodukte einer Hydrolyse zu unterwerfen, bei der die Reaktionsprodukte bis zur vollständigen Zerstörung der gebildeten Sultongruppen erwärmt werden. Die hierfür benötigte Zeit ist druck- und temperaturabhängig. So läßt sich beispielsweise bei 100 °C unter Normaldruck in 4 Stunden, unter Druck jedoch in erheblich kürzerer Zeit eine vollständige Hydrolyse zum Hydroxysulfonat erreichen. Unabhängig von den Hydrolysebedingungen erweist sich die Esterfunktion als vollkommen hydrolysestabil, d.h. Verseifungsprodukte der eingesetzten Phosphorsäureester werden nicht gebildet.

Die nach dem erfindungsgemäßen Verfahren erhältlichen Gemische oberflächenaktiver Hydroxysulfonate enthalten Verbindungen der allgemeinen Formel II

$$R^4-(C_nH_{2n}O)_y-\overset{O}{\overset{\|}{P}}(-(OC_nH_{2n})_z-R^5)-(OC_nH_{2n})_x-OCH_2(CH_2)_c-\underset{}{\overset{OH}{\overset{|}{CH}}}-(CH_2)_b-\overset{SO_3X}{\overset{|}{CH}}-(CH_2)_a-CH_3$$

sowie der Formel III

$$R^4-(C_nH_{2n}O)_y-\overset{O}{\overset{\|}{P}}(-(OC_nH_{2n})_z-R^5)-(OC_nH_{2n})_x-OCH_2(CH_2)_c-\overset{SO_3X}{\overset{|}{CH}}-(CH_2)_b-\overset{OH}{\overset{|}{CH}}-(CH_2)_a-CH_3$$

in welchen $R^4$ und $R^5$ gleich oder ungleich sind und Wasserstoff oder

$$OCH_2(CH_2)_c-\overset{OH}{\overset{|}{CH}}-(CH_2)_b-\overset{SO_3X}{\overset{|}{CH}}-(CH_2)_a-CH_3$$

oder

$$OCH_2(CH_2)_c-\overset{SO_3X}{\overset{|}{CH}}-(CH_2)_b-\overset{OH}{\overset{|}{CH}}-(CH_2)_a-CH_3$$

bedeuten, X Wasserstoff, Alkalimetallion, Erdalkalimetallion, Ammoniumion oder einen Aminrest darstellt, n eine Zahl von 2 bis 4 bedeutet, die Indices x, y und z gleich oder ungleich sind und eine Zahl von 0 bis 30 bedeuten, a und c eine Zahl von 0 bis 18 bedeuten, b 0, 1 oder 2 ist, wobei die Summe aus a und b und c zwischen 4 und 20 liegt.

Diese Gemische oberflächenaktiver Sulfophosphorsäure(partial)alkylester der allgemeinen Formeln II und III sind daher ebenfalls Erfindungsgegenstand.

Die nach dem erfindungsgemäßen Verfahren zugänglichen oberflächenaktiven Sulfophosphorsäure(partial)alkylester fallen als dunkle bis hellgelbe alkalische Lösungen in Form ihrer Alkali-, Erdalkali-, Ammonium- und/oder Aminsalze an. Gewünschtenfalls können diese mit Wasserstoffperoxidlösung oder Alkalihypochloritlösung (Chlorlauge) in ansich bekannter Weise bei 40 - 55 °C gebleicht werden. Der pH-Wert dieser Lösungen kann unter Verwendung von Mineral- und/oder Carbonsäuren, beispielsweise Salzsäure, Schwefelsäure, Phosphorsäure, Citronensäure und/oder Milchsäure, neutral eingestellt werden.

Die als Edukte zum Einsatz gelangenden ungesättigten Alkyl-, ungesättigten Alkyl/ungesättigten Alkylpolyoxyalkyl- und/oder ungesättigten Alkylpolyoxyalkyphosphorsäureester der allgemeinen Formel I sind nach literaturbekannten Verfahren zugänglich: Ihre Herstellung geht aus von ungesättigten Alkoholen mit 8 bis 24 Kohlenstoffatomen und Jodzahlen zwischen 10 und 150. Vorzugsweise werden ungesättigte Alkohole mit 12 bis 24 Kohlenstoffatomen und besonders bevorzugt ungesättigte Alkohole mit 16 bis 22 Kohlenstoffatomen, beispielsweise Oleylalkohol oder technische überwiegend aus Oleylalkohol, Palmitoleylalkohol, Linoleylalkohol, Gadoleylalkohol und/oder Erucylalkohol bestehende Alkoholschnitte eingesetzt. Bei technischen Alkoholschnitten sind geringe Anteile an gesättigten Alkoholen, beispielsweise an Cetyl- und/oder Stearylalkohol, tragbar, insbesondere wenn die daraus durch Oxalkylierung hergestellten Produkte selbst wasserlöslich sind. Besonders bevorzugt werden technische Cetyl/Oleyl- und Cetyl/Linoleyl-Alkoholschnitte mit Jodzahlen zwischen 70 und 110 eingesetzt.

Die Oxalkylierungen ungesättigter Alkohole mit Ethylenoxid, Propylenoxid und/oder Butylenoxid werden nach bekannten großtechnischen Verfahren durchgeführt (siehe beispielsweise in Chemische Technologie, Band 7, Seite 131 bis 132, Carl-Hauser-Verlag, München-Wien (1986)). Der mittlere Oxalkylierungsgrad x, y oder z der erhaltenen Gemische homologer Oxalkylate entspricht der molaren Menge der angelagerten Alkylenoxide. Die erfindungsgemäßen Phosphorsäure(partial)alkylester der allgemeinen Formel II und III besitzen vorzugsweise Oxalkylierungsgrade zwischen 0 und 10.

Die Phosphatierung ungesättigter, gegebenenfalls, oxalkylierter, Alkohole erfolgt in ansich bekannter Weise (Chemische Technologie, Band 7, Seite 123 ff, Carl-Hauser-Verlag, München-Wien (1986)), in dem beispielsweise die ungesättigten Alkohole und/oder ungesättigten Alkoholpolyoxyalkylether mit Phosphorpentoxid oder Polyphosphorsäure umgesetzt werden. Bei diesem Verfahren werden Gemische aus Mono-, Di- und Trialkylderivaten gebildet. Unter Einsatz von Wasserschleppmitteln lassen sich solche Partialestergemische auch direkt unter Verwendung von Orthophosphorsäure erhalten. Bei Reaktionsbedingungen oberhalb von 160 °C findet dabei jedoch keine klassische Veresterung sondern primär die Bildung von Di- und Polyphosphorsäure statt, die in bekannter Weise mit Alkoholen und/oder Alkoholpolyoxyalkylethern abreagieren.

Zur Herstellung hochreiner Mono-, Di- und Triester können ungesättigte Alkohole und/oder ungesättigte Alkoholpolyoxyalkylether mit Phosphoroxychlorid umgesetzt werden. Infolge der hohen Korrosionsbelastung bei Verwendung von Phosphoroxychlorid hat dieses Verfahren jedoch nur geringe Bedeutung.

Die nach dem erfindungsgemäßen Verfahren zugänglichen Sulfophosphorsäure(partial)alkylester der allgemeinen Formeln II und III weisen eine hohe Oberflächenaktivität sowie gute anwendungstechnische Tensideigenschaften auf. Sie verfügen auch in hartem Wasser über eine erhöhte Schaumbeständigkeit und erweisen sich trotz hohen Molekulargewichts als gut wasserlöslich. Besonders hervorzuheben ist ihre ausgeprägte Stabilität in hochalkalischen Medien, ihre emulgierenden Eigenschaften sowie das gute textile Netzvermögen.

## Beispiele

### 1. Herstellung von technischen Oleylphosphaten

#### 1.1 Herstellung von Oleylphosphat A

In einem mit Rührer und Thermometer versehenen 1-l-Dreihalskolben wurden 420 g (1,5 Mol) technischer Oleylalkohol, der im Gemisch mit geringen Anteilen an Cetylalkohol vorlag (HD-Ocenol[R] 80/85: Jodzahl 89, OH-Zahl 205) vorgelegt. Bei einer Temperatur von 60 bis 70 °C wurde mit Hilfe eines gegen Luftfeuchtigkeit geschützten Pulverdosiergerätes gleichmäßig innerhalb von 2 Stunden 71 g (0,5 Mol) Phosphorpentoxid eingetragen. Nach einer zweistündigen Nachreaktionszeit bei 70 °C wurden 10 ml Wasser zugegeben und weitere 3 Stunden bei 90 °C gerührt.

Es wurden 490 g eines dunkelfarbigen Öls erhalten, das folgende Kenndaten besaß:

| | |
|---|---|
| Monoester | 43,3 Gew.-% |
| Diester | 38,4 Gew.-% |
| Triester | 3,4 Gew.-% |
| $H_3PO_4$ | 1,7 Gew.-% |
| freier Alkohol | 13,0 Gew.-% |
| $H_2O$ (nach Fischer) | 0,15 Gew.-% |
| Jodzahl | 74 |
| mittleres Molekulargewicht | 451 |
| Doppelbindungsäquivalente pro Mol Phosphat | 1,3 |

1.2 Herstellung von Oleylphosphat B

Analog Beispiel 1.1 wurden 420 g (1,5 Mol) technischer Oleylalkohol (HD-Ocenol[R] 90/95: Jodzahl 92, OH-Zahl 206) zu Oleylphosphat umgesetzt. Es wurden 500 g dunkelfarbigen Öls mit folgenden Kenndaten erhalten:

| | |
|---|---|
| Monoester | 43,9 Gew.-% |
| Diester | 43,9 Gew.-% |
| Triester | 1,9 Gew.-% |
| $H_3PO_4$ | 0,5 Gew.-% |
| freier Alkohol | 9,8 Gew.-% |
| $H_2O$ (nach Fischer) | 0,03 Gew.-% |
| Jodzahl | 76 |
| mittleres Molekulargewicht | 464 |
| Doppelbindungsäquivalente pro Mol Phosphat | 1,3 |

2. Sulfonierung von Oleylphosphaten

2.1 Sulfonierung mit 30 % $SO_3$-Überschuß

In einem 1-l-Sulfierkolben mit mechanischem Rührer, Gaseinleitungsrohr und Mantelkühlung wurden 225 g (0,5 Mol) Oleylphosphat A vorgelegt und bei 35 °C mit 68 g (0,85 Mol) $SO_3$, entsprechend einem auf die Doppelbindungsäquivalente bezogenen 30 %igem Überschuß, umgesetzt. Das $SO_3$ wurde durch Erhitzen aus einer entsprechenden Menge Oleum ausgetrieben, mit Stickstoff auf eine Konzentration von 5 Vol.-% verdünnt und innerhalb von 31 Minuten in den Phosphorsäureester eingeleitet, wobei die Temperatur des Reaktionsgemisches durch Kühlung auf Temperaturen unterhalb 50 °C gehalten wurde. Nach der Sulfonierung wurde das Reaktionsgemisch auf 10 °C gekühlt, in eine verdünnte Lösung von 40 g (1 Mol) NaOH in 700 ml Wasser eingerührt und anschließend 4 Stunden auf dem Dampfbad bei 95 bis 100 °C hydrolysiert. Nach dem Abkühlen auf 20 °C wurde der pH-Wert des Reaktionsgemisches durch Zugabe von HCl-Lösung auf 7,0 eingestellt.

| Kenndaten des Produktes: | |
|---|---|
| Aniontensid (Zweiphasentitrationsmethode nach Einheitsmethode DGF-H-III-10) : | 16 Gew.% = 0,30 mval/g |
| unsulfierte Anteile (DGF-G-III-6b) | 1 Gew.-% |
| $Na_2SO_4$ | 1 Gew.-% |
| $Na_3PO_4$ | <0,1 Gew.-% |
| $H_2O$ (nach Fischer) | 82 Gew.-% |
| Gesamtschwefel | 1,2 Gew.-% |
| mittleresMolekulargewicht | 539 |
| Klett-Farbzahl | 135 |

Die Klett-Farbzahl wurde bei allen sulfonierten Produkten nach 30 Minuten Bleichung mit 5 Gew.-% einer 35 %igen Wasserstoffperoxidlögung bestimmt. Die Messung erfolgte bei einer Konzentration von 5 Gew.-% Aniontensid, pH = 7 sowie unter Verwendung einer 1-cm-Küvette und eines Blaufilters (400 bis 465 µ).

2.2 Sulfonierung mit 50 % $SO_3$-Überschuß

Analog Beispiel 2.1 wurden 78 g (0,98 Mol) $SO_3$ entsprechend einem auf die Doppelbindungsäquivalente bezogenen 50 %igen $SO_3$-Überschuß innerhalb von 37 Minuten in 225 g (0,5 Mol) Oleylphosphat A eingeleitet. Die Neutralisation wurde mit 48 g (1,2 Mol) NaOH in 800 ml Wasser durchgeführt.
Das erhaltene Produkt hatte folgende Kenndaten:

| | |
|---|---|
| Aniontensid (DGF-H-III-10): | 14 Gew.-% = 0,26 mval/g |
| unsulfierte Anteile (DGF-G-III-6b): | 3 Gew.-% |
| $Na_2SO_4$ | 4 Gew.-% |
| $Na_3PO_4$ | <0,1 Gew.-% |
| $H_2O$ (nach Fischer) | 79 Gew.-% |
| Gesamtschwefel | 1,78 Gew.-% |
| mittleres Molekulargewicht | 549 |
| Klett-Farbzahl | 246 |

2.3 Sulfonierung bei 70 °C

Versuch 2.1 wurde bei einer Sulfonierungstemperatur von 70 °C wiederholt.
Das erhaltene Produkt hatte folgende Kenndaten:

| | |
|---|---|
| Aniontensid (DGF-H-III-10): | 15 Gew.-% = 0,28 mval/g |
| unsulfierte Anteile (DGF-G-III-6b): | 2 Gew.-% |
| $Na_2SO_4$ | 2 Gew.-% |
| $Na_3PO_4$ | <0,1 Gew.-% |
| $H_2O$ (nach Fischer) | 81 Gew.-% |
| Gesamtschwefel | 1,41 Gew.-% |
| mittleres Molekulargewicht | 539 |
| Klett-Farbzahl | 538 |

2.4 Sulfonierung von Oleyphosphat B

Analog Beispiel 2.1 wurden 232 g (0,5 Mol) Oleylphosphat B mit 68 g (0,85 Mol) $SO_3$ entsprechend einem die Doppelbindungsäquivalente bezogenen 30 %igen Überschuß, umgesetzt.

Das erhaltene Produkt hatte folgende Kenndaten:

| | |
|---|---|
| Aniontensid (DGF-H-III-10): | 17 Gew.-% = 0,31 mval/g |
| unsulfierte Anteile (DGF-G-III-6b): | 1 Gew.-% |
| $Na_2SO_4$ | 1 Gew.-% |
| $Na_3PO_4$ | <0,1 Gew.-% |
| $H_2O$ (nach Fischer) | 81 Gew.-% |
| Gesamtschwefel | 1,30 Gew.-% |
| mittleres Molekulargewicht | 552 |
| Klett-Farbzahl | 143 |

## 2.5 Hydrolyse und Neutralisation mit Ammoniumhydroxid

Versuch 2.1 wurde wiederholt, wobei jedoch die Hydrolyse und Neutralisation mit 68 g (1 Mol) konzentrierter (25 %iger) Ammoniumhydroxidlösung in 200 ml Wasser in einer geschlossenen Apparatur unter Rückfluß durchgeführt wurde.

Das erhaltene Produkt hatte folgende Kenndaten:

| | |
|---|---|
| Aniontensid (DGF-H-III-10): | 58 Gew.-% = 0,10 mval/g |
| unsulfierte Anteile (DGF-G-III-6b): | 5 Gew.-% |
| $Na_2SO_4$ | 2 Gew.-% |
| $Na_3PO_4$ | <0,1 Gew.-% |
| $H_2O$ (nach Fischer) | 35 Gew.-% |
| Gesamtschwefel | 4,01 Gew.-% |
| mittleres Molekulargewicht | 527 |
| Klett-Farbzahl | 156 |

## 2.6 Sulfonierung im Fallfilmreaktor

In einem kontinuierlich arbeitenden Fallfilmreaktor wurden 1,8 kg (4,05 Mol) Oleylphosphat A bei einem Durchsatz von 10 g/Minute mit $SO_3$ im Molverhältnis Phosphat : $SO_3$ = 1 : 1,3 zur Reaktion gebracht. Das rohe Sulfonierungsprodukt wurde kontinuierlich in konzentrierte Natronlauge eingerührt und dann wie unter 2.1 beschrieben hydrolysiert und aufgearbeitet.

Das erhaltene Produkte hatte folgende Kenndaten:

| | |
|---|---|
| Antiontensid (DGF-H-III-10): | 44 Gew.-% = 0.82 mval/g |
| unsulfierte Anteile (DGF-G-III-6b): | 3 Gew.-% |
| $Na_2SO_4$ | 3 Gew.-% |
| $Na_3PO_4$ | <0,1 Gew.-% |
| $H_2O$ (nach Fischer) | 50 Gew.-% |
| Gesamtschwefel | 3,38 Gew.-% |
| mittleres Molekulargewicht | 539 |
| Klett-Farbzahl | 104 |

**Ansprüche**

1. Verfahren zur Herstellung wäßriger Lösungen oberflächenaktiver Sulfophosphorsäure(partial)-alkylester und deren Alkali-, Erdalkali-, Ammonium- und/oder Aminsalze, dadurch gekennzeichnet, daß man ungesättigte Alkyl, ungesättigte Alkyl/ungesättigte Alkylpolyoxyalkyl- und/oder ungesättigte Alkylpolyoxyalkylphosphorsäureester der allgemeinen Formel I

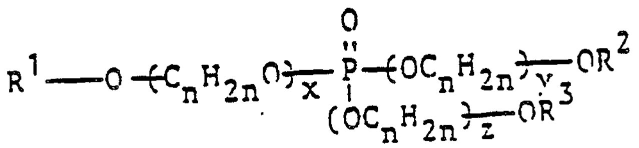

in welcher der Rest $R^1$ eine Alkenylgruppe mit 8 bis 24 Kohlenstoffatomen bedeutet, die Reste $R^2$ und $R^3$ gleich oder ungleich sind und Wasserstoff oder eine Alkenylgruppe mit 8 bis 24 Kohlenstoffatomen bedeuten, n eine Zahl von 2 bis 4 ist, die Indices x, y und z gleich oder ungleich sind und eine Zahl von 0 bis 30 bedeuten, mit $SO_3$ umsetzt, die Umsetzungsprodukte mit wäßrigen Lösungen von 1 bis 1,5 Mol Alkalihydroxiden, Erdalkalihydroxiden, Ammoniumhydroxiden und/oder Aminen oder mit 1 - 1,5 Mol wasserfreien Aminen pro Mol angelagertem $SO_3$ hydrolysiert.

2. Verfahren nach Anspruch 1, dadurch gekennzeichnet, daß der Rest $R^1$ eine Alkenylgruppe mit 12 bis 24 Kohlenstoffatomen bedeutet, die Reste $R^2$ und $R^3$ gleich oder ungleich sind und Wasserstoff oder eine Alkenylgruppe mit 12 bis 24 Kohlenstoffatomen bedeuten, n = 2 ist, die Indices x, y und z gleich oder ungleich sind und eine Zahl von 0 bis 10 darstellen.

3. Verfahren nach einem oder beiden der Ansprüche 1 bis 2, dadurch gekennzeichnet, daß der Rest $R^1$ eine Alkenylgruppe mit 16 bis 22 Kohlenstoffatomen oder eine überwiegend aus Oleyl-, Palmitoleyl-, Linoleyl-, Gadoleyl- und/oder Erucylgruppen bestehende Fettalkylgruppe bedeutet, die Reste $R^2$ und $R^3$ gleich oder ungleich sind und Wasserstoff, eine Alkenylgruppe mit 16 bis 22 Kohlenstoffatomen oder eine überwiegend aus Oleyl-, Palmitoleyl-, Linoleyl-, Gadoleyl-und/oder Erucylgruppen bestehende Fettalkylgruppe bedeuten.

4. Verfahren nach einem oder mehreren der Ansprüche 1 bis 3, dadurch gekennzeichnet, daß die Umsetzungen mit $SO_3$ bei 20 bis 80 °C, vorzugsweise bei 30 bis 50 °C, mit Gemischen aus gasförmigem $SO_3$ und Luft oder Inertgasen durchgeführt werden, mit der Maßgabe, daß der $SO_3$-Gehalt der Gasgemische zwischen 1 und 10 Vol.-% liegt.

5. Verfahren nach einem oder mehreren der Ansprüche 1 bis 4, dadurch gekennzeichnet, daß das molare Verhältnis der Doppelbindungsäquivalente im Phosphorsäureester : $SO_3$ zwischen 100 : 5 und 100 : 180, vorzugsweise zwischen 100 : 5 und 100 :130 liegt.

6. Oberflächenaktive Sulfophosphorsäure(partial)alkylester der allgemeinen Formel II

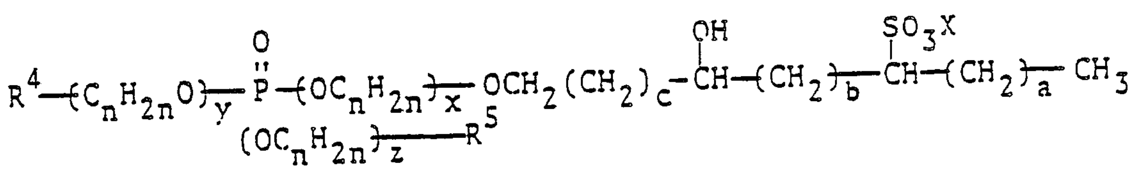

und der allgemeinen Formel III

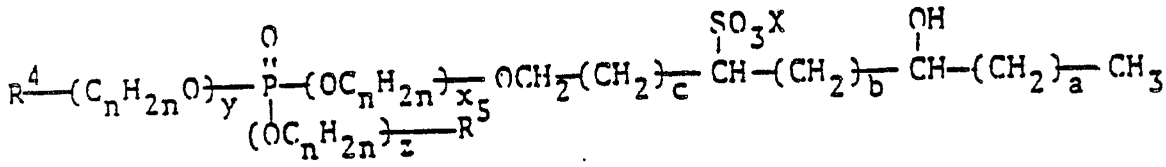

in welchen die Reste $R^4$ und $R^5$ gleich oder ungleich sind und Wasserstoff oder

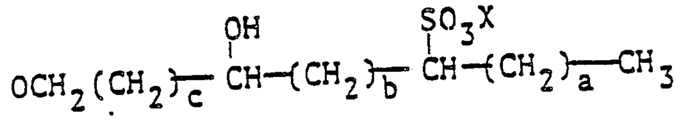

oder

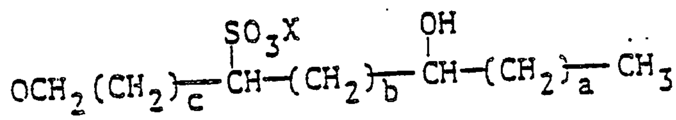

bedeuten, X Wasserstoff, ein Alkalimetallion, Erdalkalimetallion, Ammoniumion oder einen Aminrest bedeutet, n eine Zahl von 2 bis 4 darstellt, die Indices x, y und z gleich oder ungleich sind und eine Zahl von 0 bis 30 bedeuten, a und c eine Zahl von 0 bis 18 darstellen, b 0, 1 oder 2 ist, wobei die Summe aus a und b und c zwischen 4 und 20 liegt, wie sie erhalten werden nach dem Verfahren gemäß den Ansprüchen 1 bis 5.